# EUROPÄISCHE PATENTANMELDUNG

(11) **EP 0 863 336 A2**
(43) Veröffentlichungstag der Anmeldung: **09.09.1998**
(21) Anmeldenummer: 98102317.9
(22) Anmeldetag: 11.02.1998
(51) Int. Cl.: F16J 15/32

(54) **Abdichtung für hin- und hergehende Maschinenteile, insbesondere Ventilschaftabdichtung**

(30) Priorität: 06.03.1997 DE 19709170
(71) Anmelder: CR Elastomere GmbH, D-51379 Leverkusen-Opladen (DE)
(72) Erfinder: Netzer, Jürgen, 51381 Leverkusen (DE)
(74) Vertreter: Glanz, Werner

(57) **Zusammenfassung**

Die Erfindung betrifft eine Abdichtung für hin- und hergehende Maschinenteile, insbesondere Ventilschaftdichtung für Verbrennungskraftmaschinen, bestehend aus einem Dichtelement, das aus einem elastomeren Werkstoff hergestellt ist und eine Dichtlippe aufweist, die mit einer Dichtkante dichtend an der Mantelfläche des hin-und hergehenden Teiles, z.B. des Ventilschaftes anliegt, wobei die Dichtkante durch zwei gegeneinander geneigte kegelstumpfförmige Oberflächen gebildet ist. Um unabhängig vom Ölangebot immer den gleichen Staudruck in dem sich verjüngenden Spalt vor der Dichtkante zu erzeugen, ist mindestens eine der die Dichtkante (7) bildenden Oberflächen (9, 10) in mehrere Abschnitte (12, 13) mit unterschiedlichen Neigungswinkeln (α₁, α₂) zur Wellenachse oder dgl. unterteilt.

## Beschreibung

Die Erfindung betrifft eine Abdichtung nach dem Oberbegriff des Anspruches 1.

Um einen unkontrollierten Durchtritt von Schmieröl durch den Führungsspalt zum Ventilsitz zu verhindern, werden die Ventilschäfte moderner Verbrennungsmotoren auf der Ventiltriebsseite abgedichtet. Die Abdichtungen für Ventilschafie haben zunächst die Aufgabe, dem von Ventiltriebwerk kommenden Öl den Zutritt zum Ventilführungsspalt zu versperren. Ein zu scharfes Abstreifen muß dabei vermieden werden, da sonst mangels ausreichender Schmierung ein hoher Verschleiß an Ventilschaft und -führung auftreten kann. Ventilschaftabdichtungen sind somit zugleich Öldosiereinrichtungen.

Die bekannten Abdichtungen für Ventilschäfte in Brennkraftmaschinen bestehen aus einem Dichtelement aus elastomerem Werkstoff mit einer federbelasteten Dichtlippe, die mit einer Dichtkante abdichtend auf dem Ventilschaft aufliegt. Die Dichtkante wird durch zwei gegeneinander geneigte kegelstumpfförmige Oberflächen der Dichtlippe gebildet. Die Dichtlippe streift dabei bei der Hin- und Herbewegung das aus der Ventilkammer austretende Öl ab. Durch Variationen der Federvorspannung und der Dichtlippengestaltung ist es möglich, den Öldurchlaß an den Ventilen bis auf den zur Schmierung erforderlichen geringen Rest zu reduzieren und so für jeden Motor die zweckmäßigste Dosierung zu erreichen. Wichtig ist dabei der Winkel der der Ventilkammer zugewandten Oberfläche der Dichtkante, der meist einen Wert von α = 40° bis 45° gegenüber der Achse des Ventilschaftes aufweist. Für Sonderanwendungen sind aber auch bereits kleinere Winkel bis α = 30° bekanntgeworden.

Die Öldosierung von Ventilschaftdichtringen wird insbesondere bei Ausführung mit flachem Winkel α stark vom Ölangebot am Ventil beeinflußt. Das Ölangebot variiert jedoch aufgrund der Konstruktion des Zylinderkopfes (Lage der Zulaufbohrung) von Ventil zu Ventil und ist zusätzlich aufgrund des Ölpumpenantriebs auch bestimmt vom Lastpunkt des Motors.

Insbesondere bei kleinen Kontaktwinkeln (α < 35°) liegt auf der Ölseite des Dichtrings ein sich so stark verjüngender Spalt vor, daß in Abhängigkeit vom Ölangebot beim Öffnen des Ventils ein Staudruck entsteht, der Einfluß auf die durchgelassene Ölmenge nimmt. Eine solche Erscheinung ist bei Standarddichtungen mit Kontaktwinkeln α > 40° kaum bekannt.

Aufgabe der vorliegenden Erfindung ist es, eine Abdichtung gattungsgemäßer Art zu schaffen, bei der - insbesondere bei der Anwendung als Ventilschaftdichtung - unabhängig vom Ölangebot immer der gleiche Staudruck in dem sich verjüngenden Spalt vor der Dichtkante herrscht, während überschüssiges Öl abgestriffen wird.

Gelöst wird diese Aufgabe durch die im kennzeichnenden Teil des Anspruches 1 beschriebene Maßnahme der Unterteilung einer der die Dichtkante bildenden kegelstumpfförmigen Oberfläche in mehrere Abschnitte mit unterschiedlichen Neigungswinkeln, wobei der Neigungswinkel des in der Nähe der Dichtkante liegenden Bereichs kleiner als 35° und der benachbarte Abschnitt mit einem Neigungswinkel größer als 40° ausgebildet ist. Bei einem bevorzugten Ausführungsbeispiel ist der Neigungswinkel des ersten Abschnitts 20° und der des benachbarten Abschnitts 45° groß.

Es entsteht somit eine Stufendichtkante, die in der Nähe der Kontaktstelle mit dem Ventilschalt den flachen Kontaktwinkel aufweist und im weiteren Verlauf in Abhängigkeit von der geforderten Öldosierung und dem minimalen Ölangebot in einen steileren Winkel übergeht.

Damit ist sichergestellt, daß praktisch unabhängig vom Ölangebot immer der gleiche Staudruck in dem sich verjüngenden Spalt auftritt, während überschüssiges Öl im Bereich des steileren Winkels abgestriffen wird.

Neben der kantenförmigen Ausbildung des Übergangs von dem einen Abschnitt zum anderen Abschnitt ist es nach einem weiteren Merkmal der Erfindung auch möglich, einen kontinuierlichen, abgerundeten Übergang zu wählen.

Zur Vorspannung der Dichtlippe kann nach einem weiteren Merkmal der Erfindung eine Schraubenzugfeder vorgesehen werden. Auch kann ein metallischer Versteiffingsring für das aus elastomerem Werkstoff gefertigte Dichtelement vorhanden sein.

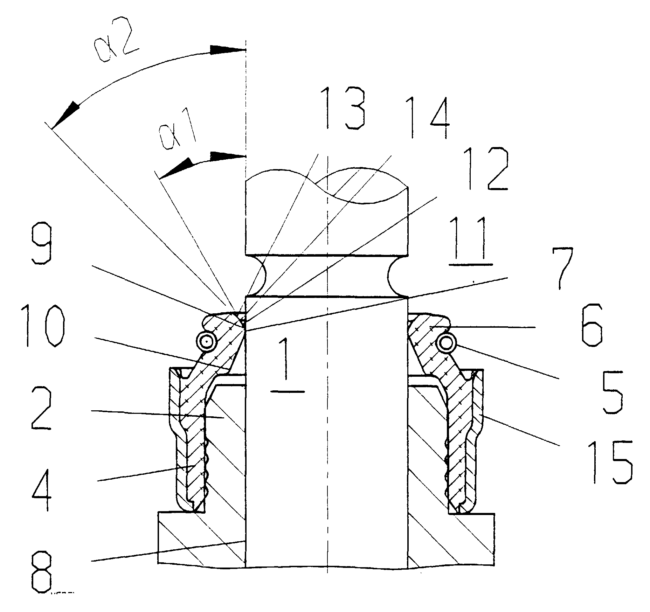

Ein Ausführungsbeispiel der Erfindung ist in der beiliegenden Zeichnung dargestellt und wird nachstehend näher beschrieben. Obwohl hier eine Abdichtung für Ventilschäfte dargestellt ist, ist die Erfindung nicht auf dieses Anwendungsbeispiel beschränkt. Sie ist vielmehr ganz generell für Abdichtungen für hin- und hergehende Maschinenteile geeignet und anwendbar.

Zur Abdichtung des Ventilschaftes 1 dient ein auf die Ventilführung 2 aufgesetztes Dichtelement 4, das aus elastomerem Werkstoff gefertigt ist und eine mittels einer Schraubenzugfeder 5 vorgespannte Dichtlippe 6 aufweist. Die Dichtlippe 6 liegt mit einer Dichtkante 7 auf der Mantelfläche 8 des Ventilschaftes 1 unter Vorspannung auf. Die Dichtkante 7 wird durch zwei gegeneinander geneigte kegelstumpfförmige Oberflächen 9 und 10 gebildet. Die der Ölseite 11 zugewandte Oberfläche 9 der Dichtkante 7 ist in zwei Abschnitte 12 und 13 mit unterschiedlichen Neigungswinkeln α₁ und α₂ unterteilt, so daß eine Kante 14 entsteht. Der Winkel α₁ ist zweckmäßiger kleiner 35°, der Winkel α₂ größer als 40°. Zur Versteiffing des Dichtelementes 4 ist dieses am Mantel mit einem metallischen Versteifungsring 15 verbunden.

## Patentansprüche

1. Abdichtung für hin- und hergehende Maschinenteile, insbesondere Ventilschaftdichtung für Verbrennungskraftmaschinen, bestehend aus einem Dichtelement, das aus einem elastomeren Werkstoff hergestellt ist und eine Dichtlippe aufweist, die mit einer Dichtkante dichtend an der Mantelfläche des hin-und hergehenden Teiles, z. B. des Ventilschaftes anliegt, wobei die Dichtkante durch zwei gegeneinander geneigte kegelstumpfförmige Oberflächen gebildet ist, dadurch gekennzeichnet, daß mindestens eine der die Dichtkante (7) bildenden Oberflächen (9, 10) mehrere Abschnitte (12, 13) mit unterschiedlichen Neigungswinkeln (α₁, α₂) zur Wellenachse oder dgl. aufweist.

2. Abdichtung nach Anspruch 1, dadurch gekennzeichnet, daß die Neigungswinkel (α₁, α₂) der einzelnen Abschnitte (12, 13) der kegelstumpfförmigen Oberfläche von der Dichtkante (7) aus nach außen zunehmen.

3. Abdichtung nach einem der Ansprüche 1 oder 2, dadurch gekennzeichnet, daß die kegelstumpfförmige Oberfläche (9) zwei Abschnitte (12, 13) mit unterschiedlichen Neigungswinkeln α₁ und α₂ aufweist, wobei der die Dichtkante benachbarte Abschnitt (12) einen Neigungswinkel (α₁) von < 35° und der zweite Abschnitt (13) einen Neigungswinkel (α₂) von > 40° aufweist.

4. Abdichtung nach Anspruch 3, dadurch gekennzeichnet, daß der Neigungswinkel des der Dichtkante benachbarten Abschnittes (12) α₁ = 20° und der Neigungswinkel des zweiten Abschnittes (13) α₂ = 45° groß ist.

5. Abdichtung nach einem der Ansprüche 1 bis 4, dadurch gekennzeichnet, daß die beiden Abschnitte (12, 13) kontinuierlich ineinander übergehen.

6. Abdichtung nach einem der Ansprüche 1 bis 5, dadurch gekennzeichnet, daß zur Vorspannung der Dichtlippe (6) eine Schraubenzugfeder (5) vorgesehen ist.

7. Abdichtung nach einem der Ansprüche 1 bis 4, dadurch gekennzeichnet, daß das Dichtelement (4) mit einem metallischen Versteifungsring (15) verbunden ist.
